# EUROPEAN PATENT APPLICATION

(11) **EP 1 669 010 A1**
(43) Date of publication of application: **14.06.2006**
(21) Application number: 05027210.3
(22) Date of filing: 13.12.2005
(51) Int. Cl.: A47J 27/21

(54) **A vessel**

(30) Priority: 13.12.2004 CN 200420102300
(71) Applicant: Liu, Xing, Guangzhou (CN)
(72) Inventor: Liu, Xing, Guangzhou (CN)
(74) Representative: Lobban, Colin

(57) **Abstract**

A vessel in the form of a kettle (1) for heating liquid comprises a main body portion which defines a chamber (13) to hold liquid. A thermometer (22) is mounted in a recess (20) in the wall (10) of the main body portion. The thermometer (22) comprises a relatively wide indicator (23) and a relatively narrow elongate sensor section (32). The sensor section (32) is of metal and houses a bimetallic strip (38). The bimetallic strip (38) is attached, at one end, to an indicator needle (29) which is moveable in response to movement of the bimetallic strip (38). The metal forming the elongate sensor section (32) allows heat from liquid within the vessel to be conducted easily to the bimetallic strip (38) such that the bimetallic strip (38) may expand or contract to move the indicator needle (29) to display an accurate temperature of the liquid on the indicator (23).

## Description

### Description of Invention

THE PRESENT INVENTION relates to a vessel for heating liquid, and more particularly relates to a vessel which incorporates a device to measure the temperature of liquid within the vessel.

Many prior proposed vessels for heating liquid are not equipped with thermometers for measuring and displaying the temperature of liquid within the vessel. However, there is one type of prior proposed vessel which has a thermometer mounted to the outer surface of the vessel to display the temperature of the liquid in the vessel, but there are problems associated with this type of prior proposed vessel. Firstly, the mounting of the thermometer on the outer surface of the vessel results in the path of heat conduction from the liquid inside the vessel to the thermometer being impeded by the wall of the vessel, which reduces the accuracy of temperature measurement. Secondly, the thermometer of this prior proposed vessel is made of glass and is long and narrow in shape, making the thermometer unsuitable for use with a small vessel. Thirdly, this type of vessel is generally made of plastic material and as the heat expansion coefficient of the plastic material is different from that of the glass of the thermometer, the level of expansion and contraction of the vessel during heating and cooling is different to the level of expansion and contraction of the thermometer. This difference in the level of expansion and contraction between the vessel and the thermometer may cause the thermometer to become detached from the surface of the vessel.

One solution to these problems would be to mount the thermometer on an inner wall of the vessel. However, it may be difficult to securely mount the thermometer on the inner wall, and if the thermometer is broken the chemicals such as alcohol or mercury within the thermometer may mix with liquid within the vessel and contaminate the liquid within the vessel. The contamination of liquid within the vessel may pose a serious health hazard to a user of the vessel if the user were to ingest the contaminated liquid accidentally.

The present invention seeks to provide an in improved vessel.

According to one aspect of the present invention, there is provided a vessel for holding liquid, the vessel incorporating a body having an aperture, the body defining an outer surface and an inner surface, the vessel further incorporating a thermometer which has an indicator and a substantially cylindrical sensor section, the thermometer being mounted to the body so that the indicator is positioned on the outer surface of the body, with the substantially cylindrical sensor section protruding through the aperture and into the interior of the vessel.

Preferably the thermometer incorporates at least one bimetallic strip, one end of the bimetallic strip being connected to the sensor section and the other end of the bimetallic strip being connected to move a pointer on the indicator.

Conveniently the body is provided with an indented region onto which the thermometer is mounted, with the indicator being mounted onto the outer surface of the body of the vessel.

According to another aspect of the present invention, there is provided a vessel in the form of a kettle for heating liquid, the kettle comprising a body which defines a chamber for holding liquid, the body having a wall which incorporates an indented region which is provided with an aperture therethrough, the said indented region defining a recess in the said wall, the kettle further comprising a thermometer with one end of the thermometer being defined by a relatively wide indicator which is dimensioned to fit within the recess in the wall, and the other end of the thermometer being defined by a relatively narrow elongate sensor section which is of metal and is connected to one side of the indicator, the thermometer being mounted by a mounting arrangement to the vessel so that part of the sensor section extends through the aperture in the indented region and into the interior of the chamber, the sensor section of the thermometer incorporating part of at least one elongate substantially helical bimetallic strip, the at least one bimetallic strip is connected to a pointer which is positioned adjacent the indicator, the at least one bimetallic strip being configured to move in response to a change in temperature of liquid within the kettle, such that the at least one bimetallic strip moves the pointer to a position on the indicator which corresponds to the temperature of the liquid within the kettle.

Preferably a substantially transparent cover is mounted to the outer surface of the body of the vessel to at least partly cover the indicator.

Conveniently the substantially transparent cover is mounted at least partly within the said indented region.

Advantageously the indicator is of a larger diameter than the diameter of the aperture, the said sensor section being provided with threading on at least part of its outer surface, the vessel further incorporating a nut which is screwed tightly onto the threading so as to contact an inner wall of the vessel to mount the thermometer to the vessel.

Preferably the vessel further incorporates a sealing washer which is positioned between the indicator and the outer surface of the body of the vessel to provide a substantially water-tight seal between the indicator and the body of the vessel.

Conveniently the vessel incorporates a heater element which is configured to heat liquid within the vessel when electrical power from a power source is transmitted to the heater element.

Advantageously the vessel being provided in conjunction with a base unit, the vessel incorporating an electrical connector which is configured to connect with an electrical connector on the base unit when the vessel is placed substantially on the base unit, the base unit being connectable to a power source such that power from the power source may be transmitted from the base unit via the connectors to the vessel.

Preferably the electrical connectors on the vessel and the base unit are inductively coupled connectors which permit power to be transmitted between the connectors via an inductive coupling.

In order that the invention may be more readily understood, and so that further features thereof may be appreciated, embodiments of the invention will now be described, by way of example, with reference to the accompanying drawings in which:
FIGURE 1 is a diagrammatic sectional view of a vessel in accordance with a preferred embodiment of the invention, shown in conjunction with a base unit,
FIGURE 2 is a diagrammatic sectional view of part of the vessel of Figure 1, showing a stage of a mounting process to mount a thermometer to a wall of the vessel,
FIGURE 3 is a view corresponding to Figure 2, showing the thermometer mounted to the wall of the vessel, and
FIGURE 4 is a diagrammatic side view corresponding to Figure 3, showing a face of the thermometer after having been mounted on the wall of the vessel.

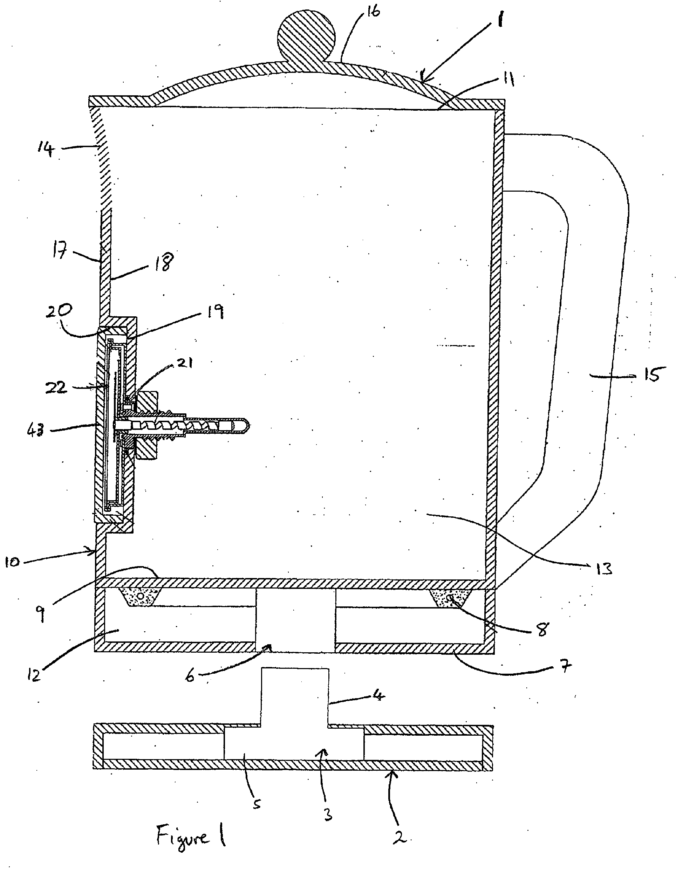

Referring initially to Figure 1 of the accompanying drawings, a vessel in the form of a kettle 1 is to be supported on a base unit 2. The base unit 2 is substantially disc shaped and is formed from a plastics material. The base unit 2 is provided with a male connector 3 which is of generally inverted T-shaped cross-section. The male connector 3 has a generally cylindrical upstanding connector section 4 which is formed integrally with a central region of a generally disc shaped support plate 5. The support plate 5 is mounted within a central region of the base unit 2, and the connector region section 4 of the male connector 3 extends upwardly from the support plate 5, and protrudes outwardly from the upper surface of the base unit 2.

The base unit 2 has an electrical cable (not shown) which can be used to connect the base unit 2 to a power source, such as the mains. The cable is connected to the male connector 3 so that an electrical current can flow from the power source to the connector section 4.

The male connector 3 is dimensioned so as to connect with a female connector 6 which is provided on a central region of a base 7 of the kettle 1. The connector section 4 of the male connector 3 in this preferred embodiment incorporates contacts (not shown) which, when the female connector 6 is brought into connection with the male connector 3, engage further contacts (not shown) provided in the female connector 6. Electrical current can then flow from the male connector 3, across the contacts, to the female connector 6.

In other embodiments of the invention, the male and female connectors 3,6 may be inductively coupled connectors which are hermetically sealed, with no exposed electrical contacts. In such other embodiments, power may be transmitted from the male connector 3 to the female connector 6 via an inductive coupling between the connectors 3,6.

The female connector 6 is connected so as to supply an electrical current to a heater element 8 in the kettle 1. The heater element 8 is mounted to the underside of a metal divider wall 9 which is positioned above and spaced apart from the base 7 of the kettle 1. The kettle 1 has a generally cylindrical main body portion which is defined by an upstanding wall 10 which is formed integrally with the base 7, so as to extend upwardly from the perimeter of the base 7 to define a generally cylindrical main body portion which has an open upper end 11. The metal divider wall 9 extends across the cylindrical body portion, and divides the body portion into a heater chamber 12 which contains the heater element 8, and a generally cup-shaped main chamber 13 which is to hold liquid. The metallic divider wall 9 allows heat to be conducted from the heater element 8 to liquid within the main chamber 13, so that the liquid may be heated.

A front side of the wall 10 is provided with a forwardly directed spout 14 to allow liquid within the kettle 1 to be poured out from the kettle 1. A handle 15 is attached to a rear side of the kettle 1 so that the kettle 1 may be lifted and tilted.

The upper open end 11 of the kettle 1 is closed by a lid 16 which may be removed to allow the kettle 1 to be filled with liquid.

The wall 10 of the kettle 1 has an outer surface 17 which forms part of the exterior of the kettle 1, and an interior surface 18 which forms part of the surface of the main chamber 13 of the kettle 1. Part of the wall 10 which forms the front side of the kettle 1 is provided with a generally circular indented region 19 which defines a recess 20 in the wall 10. The indented region 19 protrudes into the interior of the main chamber 13, away from the surrounding inner surface 18 of the wall 10. A central section of the indented region 19 is provided with a mounting aperture 21 which has an enlarged diameter on the front side of the indented region 19.

A thermometer 22 is mounted to the indented region 19 through the mounting aperture 21. The thermometer 22 and the process for mounting the thermometer 22 to the indented region 19 will be described in detail below.

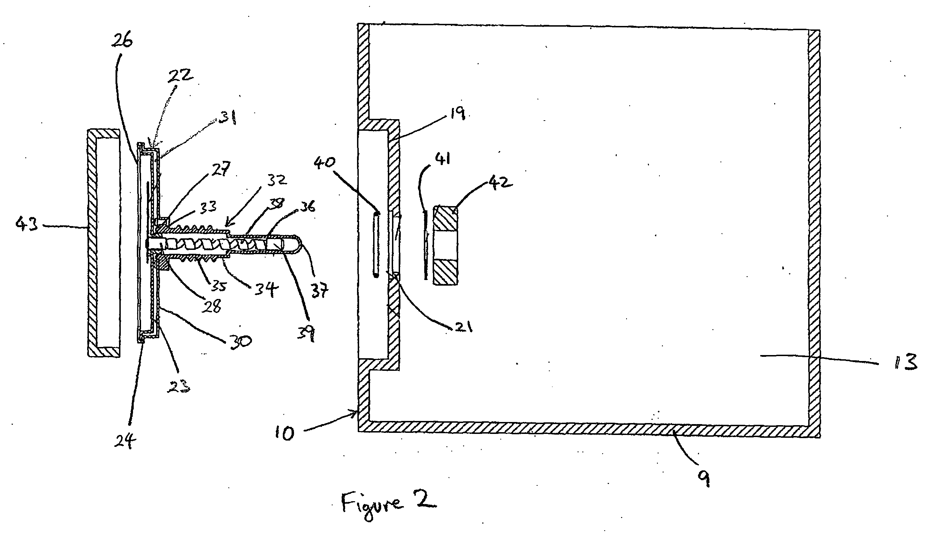

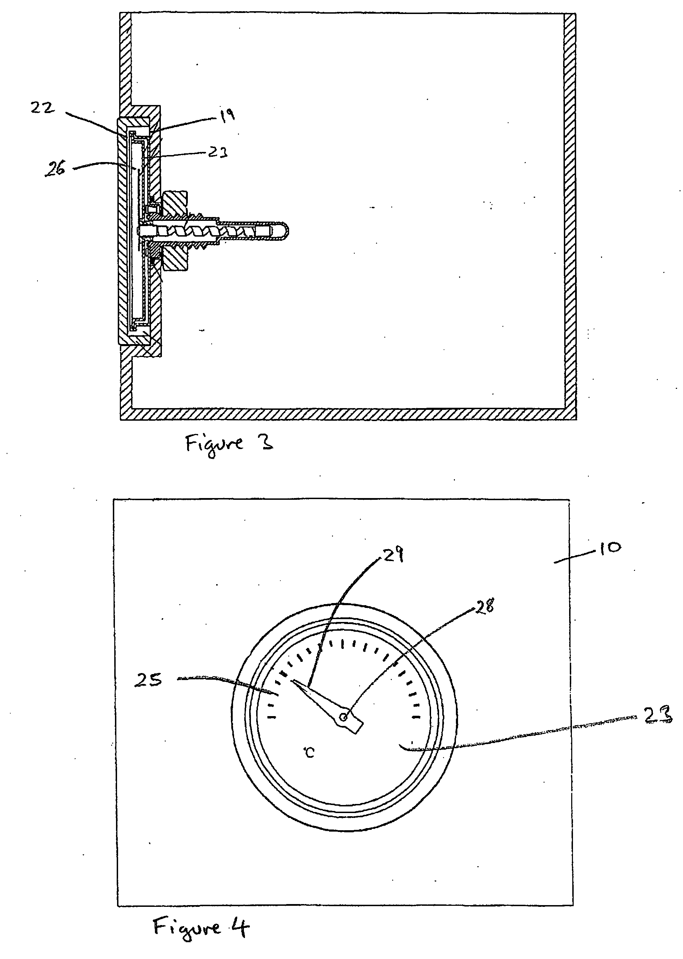

Referring now to Figures 2 to 4 of the accompanying drawings, the thermometer 22 has a generally circular plate shaped indicator face 23 which has an upturned rim 24. A scale 25 is marked on the indicator face 23 which represents a range of temperature. A transparent circular cover 26 is attached to the rim 24 to protect the indicator face 23 whilst providing a window which allows a user of the kettle 1 to view the indicator face 23.

An aperture 27 is formed in the centre of the indicator face 23 to allow an axle 28 to protrude forwardly from the indicator face 23 to support an indicator needle 29 in the space between the indicator face 23 and the cover 26. The indicator needle 29 is configured such that the rotation of the axle 28 moves the indicator needle 29 so that the indicator needle 29 points to part of the scale 25 to indicate a particular temperature. The mechanism for moving the indicator needle 29 will be described in detail below.

A rear cover 30 of similar shape, but slightly larger diameter than the indicator face 23, is mounted over the rear of the indicator face 23. A gap 31 is formed between the rear of the indicator face 23 and the rear cover 30, and it is to be understood that this gap 31 acts as an insulating layer to help minimise heat which may be conducted from the rear of the rear cover 30 to the indicator face 23.

A metal elongate sensor section 32 is mounted to a central region of the rear of the rear cover 30, so as to protrude perpendicularly rearwardly from the rear cover 30. The elongate sensor section 32 is of generally cylindrical cross section and is of a narrower diameter than the diameter of the indicator face 23.

The sensor section 32 has an enlarged metal mounting flange 33 at its front end which is mounted to the rear cover 30. The mounting flange 33 has an aperture which is aligned with the aperture 27 in the indicator face 23. A hollow metal open ended cylindrical threaded section 34 is formed integrally with the mounting flange 33, so as to extend perpendicularly rearwardly from the mounting flange 33. The threaded section 34 is of a smaller diameter than the diameter of the mounting flange 33, and the threaded section 34 has threading 35 around its outer surface. The purpose of the threading 35 will become clear from the description below.

A metal end section 36, which is of generally cylindrical cross section and of slightly smaller diameter than the threaded section 34 extends rearwardly from the rear end of the threaded section 34. The end section 36 is hollow and the hollow inside of the end section 36 is in direct communication with the hollow inside of the threaded section 34. The rear end of the end section 36 is closed by a rounded metal end 37 to seal the elongate sensor section 32.

The elongate sensor section 32 houses at least one elongate bimetallic strip 38 which is twisted so as to form a substantially helical formation. The bimetallic strip 38 is attached, at one end, to the axle 28 which supports the indicator needle 29. The bimetallic strip 38 extends rearwardly from the axle 28, along the interior of the elongate sensor section 32 to where the other end of the bimetallic strip 38 is joined together by a collar 39. The collar 39 is slideably retained within the end section 36 of the sensor section 32, so that the collar 39 may slide along the length of the interior of the end section 36. The collar 39 is, however, fitted with an anti-rotation member (not shown) which engages a groove (not shown) along the inside of the end section 36 to prevent the collar 39 from rotating relative to the end section 36.

The bimetallic strip 38 is sensitive to temperature and expands if it is raised in temperature and contract if it is lowered in temperature. The helical formation of the bimetallic strip 38 is such that when the bimetallic strip 38 expands, the strip 38 moves as if it is unwinding. As the bimetallic strip 38 unwinds, the bimetallic strip 38 effects a rotational movement and become greater in length. The collar 39 slides along the end section 36 as the bimetallic strip 38 grows longer and the collar 39 prevents the end of the bimetallic strip 38 which is joined to the collar 39 from rotating. The other end of the bimetallic strip 38 is, however, free to rotate, and rotates the axle 28 as it does so. The rotation of the axle 28 rotates the indicator needle 29 so that the indicator 29 points to a particular part of the scale 25 on the indicator face 23 which corresponds to the temperature of the sensor section 32.

The thermometer 22 is mounted to the wall 10 of the vessel 1 by a mounting arrangement which comprises a sealing washer 40, a locking washer 41 and a nut 42. During an initial stage of the mounting process, the sealing washer 40, which is of an elastic material, such as rubber, is placed over and around the sensor section 32 of the thermometer 22, until the sealing washer 40 is around the mounting flange 33. The elongate sensor section 32 is inserted through the mounting aperture 21 in the wall 10 so that the sensor section 32 protrudes into the interior of the main chamber 13. The locking washer 41 and the nut 42 are inserted over the end of the sensor section 32 which protrudes into the main chamber 13 and the nut 42 is brought into engagement with the threading 35 on the threaded section 34. The nut 42 is then screwed onto the threading 35 to pull the thermometer 22 firmly against the wall 10 and to hold the thermometer 22 securely on the wall 10. The sealing washer 40 is squashed against the outer surface of the wall 10 so as to produce a substantially water tight seal between the main chamber 13 and the exterior of the kettle 1. The locking washer 41 locks the nut 42, and minimises the chances of the nut 42 loosening and allowing the thermometer 22 to move relative to the vessel 1.

It is to be appreciated that when the thermometer 22 is mounted in position on the vessel 1, the enlarged end of the thermometer 22 defined by the indicator face 23, the rear wall 30 and the cover 26 is retained within the indented region 19 of the wall 10, as seen in Figures 1 and 3. Once the thermometer 22 has been mounted to the wall 10, a translucent protective cover 43 is placed over and around the enlarged end of the thermometer 22, on the exterior of the kettle 1. The protective cover 43 is then firmly held in position, for instance by an adhesive, to form a substantially water-tight seal between the exterior of the kettle 1 and the thermometer 22. The protective cover 43 is relatively thick compared with the cover 26 over the indicator face 23, and the protective cover 43 provides a protective layer to protect the thermometer 22 from being damaged from the exterior of the kettle 1.

The protective cover 43 acts as a thermally insulating layer which insulates the thermometer 22 from the environment outside the kettle 1 so that changes in the temperature of the surrounding environment have a minimal effect on the accuracy of the thermometer 22.

When the kettle 1 is fully assembled, the sensor section 32 of the thermometer 22 protrudes into the main chamber 13, and consequently extends into liquid contained within the main chamber 13. The sensor section 32 of the thermometer 22 is thus in direct contact with the liquid within the main chamber 13, and as the sensor section 32 is of metal, heat is easily conducted from the liquid to the bimetallic strip 38. The bimetallic strip 38 can thus expand or contract and move the indicator needle 29 to display an accurate temperature of the liquid within the main chamber 13. The thermometer 22 thus allows a user to see easily when liquid within the kettle 1 has reached a desired temperature.

The metallic construction of the sensor section 32 of the thermometer 22 means that the thermometer 22 is stronger than a glass thermometer, meaning that the sensor section 32 is less likely to be broken than an equivalent part of a glass thermometer. Furthermore, the thermometer 22 of this preferred embodiment does not contain any hazardous chemicals which may otherwise contaminate liquid within the kettle 1 should the thermometer 22 be broken. The kettle 1 of this preferred embodiment is thus substantially safer to use than a kettle which incorporates a thermometer which uses hazardous chemicals.

The use of the bimetallic strip 38 in the sensor section 32 of this preferred embodiment results in the sensor section 32 being significantly shorter than the sensor section of an equivalent glass thermometer. The thermometer 22 of this preferred is thus better suited than a glass thermometer to a vessel of a small size.

The area around the aperture 21 which contacts the parts of the thermometer 22 is relatively small, as compared with the diameter of the enlarged end of the thermometer 22, which helps to minimise the chances of seal between the thermometer 22 and the wall 10 being broken and the thermometer 22 from becoming detached from the wall 10 as a result of differences in expansion and contraction of the wall 10 and the thermometer 22. The thermometer 22 of this preferred embodiment is thus substantially less likely to become detached from the wall 10 than a thermometer which is mounted solely to the exterior of the wall 10.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A vessel for holding liquid, the vessel incorporating a body having an aperture (21), the body defining an outer surface (17) and an inner surface (18), the vessel further incorporating a thermometer (22) which has an indicator (23) and a substantially cylindrical sensor section (32), the thermometer (22) being mounted to the body so that the indicator (23) is positioned on the outer surface (17) of the body, with the substantially cylindrical sensor section (32) protruding through the aperture (21) and into the interior of the vessel.

2. A vessel according to Claim 1, wherein the thermometer (22) incorporates at least one bimetallic strip (38), one end of the bimetallic strip (38) being connected to the sensor section (32) and the other end of the bimetallic strip (38) being connected to move a pointer (29) on the indicator (23).

3. A vessel according to Claim 1 or Claim 2, wherein the body is provided with an indented region (19) onto which the thermometer (22) is mounted, with the indicator (23) being mounted onto the outer surface (17) of the body of the vessel.

4. A vessel in the form of a kettle (1) for heating liquid, the kettle (1) comprising a body which defines a chamber (13) for holding liquid, the body having a wall (10) which incorporates an indented region (19) which is provided with an aperture (21) therethrough, the said indented region (19) defining a recess (20) in the said wall (10), the kettle (1) further comprising a thermometer (22) with one end of the thermometer (22) being defined by a relatively wide indicator (23) which is dimensioned to fit within the recess (20) in the wall (10), and the other end of the thermometer (22) being defined by a relatively narrow elongate sensor section (32) which is of metal and is connected to one side of the indicator (23), the thermometer (22) being mounted by a mounting arrangement (40-42) to the vessel so that part of the sensor section (32) extends through the aperture (21) in the indented region (19) and into the interior of the chamber (13), the sensor section (32) of the thermometer (22) incorporating part of at least one elongate substantially helical bimetallic strip (38), the at least one bimetallic strip (38) is connected to a pointer (29) which is positioned adjacent the indicator (29), the at least one bimetallic strip (38) being configured to move in response to a change in temperature of liquid within the kettle (1), such that the at least one bimetallic strip (38) moves the pointer (29) to a position on the indicator (23) which corresponds to the temperature of the liquid within the kettle (1).

5. A vessel according to any one of the preceding Claims, wherein a substantially transparent cover (43) is mounted to the outer surface (17) of the body of the vessel to at least partly cover the indicator (23).

6. A vessel according to Claim 5 as dependent upon Claims 3 and 4, wherein the substantially transparent cover (43) is mounted at least partly within the said indented region (19).

7. A vessel according to any one of the preceding Claims, wherein the indicator (23) is of a larger diameter than the diameter of the aperture (21), the said sensor section (32) being provided with threading (35) on at least part of its outer surface, the vessel further incorporating a nut (42) which is screwed tightly onto the threading (35) so as to contact an inner wall (18) of the vessel to mount the thermometer (22) to the vessel.

8. A vessel according to Claim 7, wherein the vessel further incorporates a sealing washer (40) which is positioned between the indicator (23) and the outer surface (17) of the body of the vessel to provide a substantially water-tight seal between the indicator (23) and the body of the vessel.

9. A vessel according to any one of the preceding Claims, wherein the vessel incorporates a heater element (18) which is configured to heat liquid within the vessel when electrical power from a power source is transmitted to the heater element (18).

10. A vessel according to any one of the preceding Claims being provided in conjunction with a base unit (2), the vessel incorporating an electrical connector (6) which is configured to connect with an electrical connector (4) on the base unit (2) when the vessel is placed substantially on the base unit (2), the base unit (2) being connectable to a power source such that power from the power source may be transmitted from the base unit (2) via the connectors (4,6) to the vessel.
